# EUROPEAN PATENT APPLICATION

(11) **EP 4 585 822 A1**
(43) Date of publication of application: **16.07.2025**
(21) Application number: 23865170.7
(22) Date of filing: 16.08.2023
(51) Int. Cl.: F16F 7/00, F24F 1/12, F04B 39/00, F16F 15/04

(54) **AIR CONDITIONER**

(30) Priority: 12.09.2022 JP 2022144565
(71) Applicant: Mitsubishi Heavy Industries Thermal Systems, Ltd., Tokyo 100-8332 (JP)
(72) Inventor: MORI Yuji, Tokyo 100-8332 (JP); IWASE Tetsuro, Tokyo 100-8332 (JP); KANAMORI Azusa, Tokyo 100-8332 (JP)
(74) Representative: Cabinet Beau de Loménie
(86) International application number: PCT/JP2023/029597
(87) International publication number: WO 2024/057811

(57) **Abstract**

This air compressor comprises a casing, a compressor, and a support part that supports the compressor in relation to the casing. The support part has: a stud bolt that is fixed to the bottom surface of the casing and that extends axially upward; and anti-vibration rubber that supports the compressor and has a cylindrical inner peripheral surface surrounding the stud bolt and centered on the axis and an outer peripheral surface facing the outer peripheral side, the lower end of the inner peripheral surface being fixed to the stud bolt and the portion above the lower end of the inner peripheral surface accommodating the stud bolt in a gap. In the outer peripheral surface, an attachment recess in which the compressor is attached is formed by forming an annular shape centered on the axis and recessing the surface toward the inner peripheral side, and in a position overlapping the attachment recess in the axial direction on the inner peripheral surface, a tapered surface is formed which decreases in diameter from the bottom to the top.

## Description

### Technical Field

The present disclosure relates to an air conditioner.

Priority is claimed to Japanese Patent Application No. 2022-144565, filed September 12, 2022, the contents of which are incorporated herein by reference.

### Background Art

An outdoor unit of an air conditioner mainly includes a casing, a compressor, a heat exchanger, and a refrigerant pipe. The compressor is fixed to a bottom surface of the casing forming a box shape. Specifically, the compressor includes a cylindrical compressor main body and a plurality of legs that extend radially in a radial direction from a bottom surface of the compressor main body. The legs form a plate shape, and holes are formed at tips of the legs. On the other hand, a stud bolt is fixed to the bottom surface of the casing by welding, crimping, or the like. In a state in which an anti-vibration rubber is attached around the stud bolt, the holes of the legs are fitted to the anti-vibration rubber, so that the compressor is fixed in the casing.

As a specific example of the anti-vibration rubber, for example, a rubber described in PTL 1 below is known. In a technology according to PTL 1 below, a gap is formed between the anti-vibration rubber and the stud bolt. Since the gap is formed, vibration of the compressor is less likely to be transmitted to the bottom surface of the casing via the stud bolt, and thus noise can be suppressed.

### Citation List

### Patent Literature

[PTL 1] Japanese Unexamined Utility Model Registration Application Publication No. 2-99273

### Summary of Invention

### Technical Problem

Here, in recent years, there has been an increasing number of examples in which a compressor is operated at a low rotation speed from the viewpoint of energy saving. On the other hand, in a case where a high output is required, an operation is performed at a high rotation speed. That is, a frequency range of vibration generated from the compressor is wider than that in the related art. In addition, the compressor is designed to have a low mass and low inertia due to a reduction in size of the compressor, and there is a tendency for compressor vibration to increase. In this case, in order to reduce noise during the operation at a low rotation speed, it is necessary to lower a natural frequency of an antivibration support of the compressor. However, in a case where the natural frequency is lowered, the vibration and displacement of the compressor increase during the transient operation of the compressor or during start-up and stop of the compressor. As described above, in a case where a gap is simply provided between an anti-vibration rubber and a stud bolt, in a case where vibration is large, the anti-vibration rubber and the stud bolt come into contact with each other, the vibration of the compressor is transmitted to a bottom surface of a casing via the stud bolt, noise is generated from an air conditioner, and there is a concern that a strength problem may occur in a device due to the vibration.

The present disclosure has been made to solve the above problems, and an object of the present disclosure is to provide an air conditioner capable of effectively reducing noise and vibration caused by compressor vibration in a wider frequency range.

### Solution to Problem

In order to solve the above problems, an air conditioner according to the present disclosure includes a casing, a compressor that is provided in the casing, and a support part that supports the compressor with respect to the casing, in which the support part has a stud bolt that is fixed to a bottom surface of the casing and extends upward in an axial direction, and an anti-vibration rubber that supports the compressor and has a cylindrical inner peripheral surface surrounding the stud bolt and centered on an axis and an outer peripheral surface facing an outer peripheral side, a lower end of the inner peripheral surface being fixed to the stud bolt and a portion above the lower end of the inner peripheral surface accommodating the stud bolt via a gap, an attachment recessed portion, which has an annular shape centered on the axis and is recessed toward an inner peripheral side, thereby allowing the compressor to be attached, is formed on the outer peripheral surface, and a tapered surface that decreases in diameter from a lower side to an upper side is formed at a position at which the tapered surface overlaps the attachment recessed portion on the inner peripheral surface in the axial direction.

### Advantageous Effects of Invention

According to the present disclosure, it is possible to provide an air conditioner that can effectively reduce noise and vibration caused by compressor vibration in a wider frequency range.

### Brief Description of Drawings

Fig. 1 is a schematic view showing a configuration around a compressor of an air conditioner according to an embodiment of the present disclosure.
Fig. 2 is a cross-sectional view showing a configuration of an anti-vibration rubber according to the embodiment of the present disclosure.
Fig. 3 is an enlarged cross-sectional view of a main part showing the configuration of the anti-vibration rubber according to the embodiment of the present disclosure.
Fig. 4 is an explanatory view showing a state in which the anti-vibration rubber according to the embodiment of the present disclosure is deformed by vibration.
Fig. 5 is an explanatory view showing a state in which the anti-vibration rubber according to the embodiment of the present disclosure is further deformed by vibration.

### Description of Embodiments

### (Configuration of Air Conditioner)

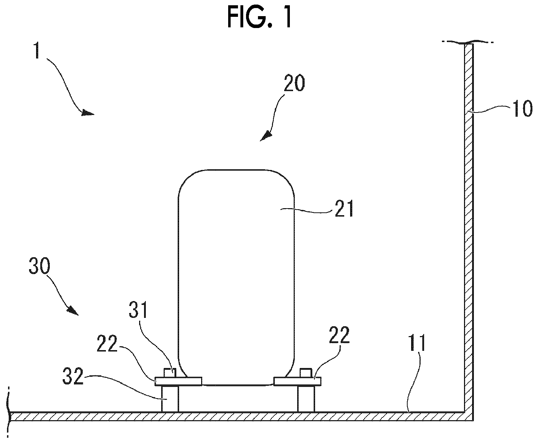

Hereinafter, an air conditioner 1 according to an embodiment of the present disclosure will be described with reference to Figs. 1 to 5. The air conditioner 1 according to the present embodiment is a device that is installed outdoors and exchanges heat between outside air and a refrigerant. In other words, the air conditioner 1 is a so-called outdoor unit. The refrigerant that has exchanged heat with the outside air in the outdoor unit is fed to the heat exchanger of the indoor unit through a pipe. An air in the room exchanges heat with the refrigerant, so that a temperature-regulated wind is fed to the room.

As shown in Fig. 1, the air conditioner 1 includes a casing 10, a compressor 20, and a support part 30. The casing 10 is a box-shaped container. In addition to a blower fan, a heat exchanger, a refrigerant pipe, and a valve device (none of which are shown), the compressor 20 is accommodated in a space formed inside the casing 10. Specifically, a scroll compressor or a rotary compressor is used as the compressor 20.

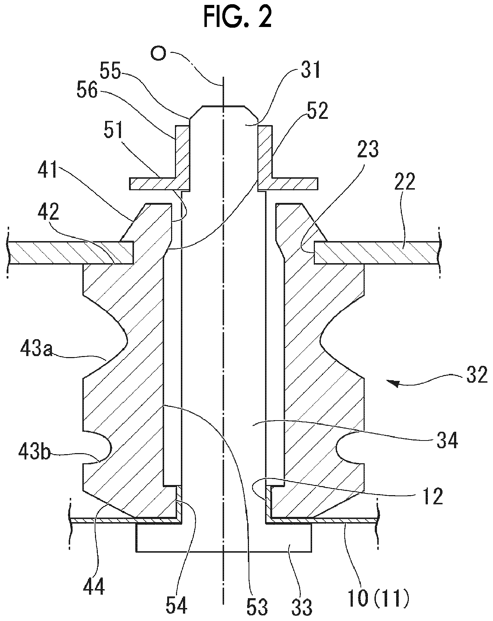

The compressor 20 forms a columnar shape in which an up-down direction is set as a central axis. The compressor 20 includes a compressor main body 21 including a rotary piston, an orbiting scroll, a fixed scroll, and the like, and a plurality of leg portions 22 provided below the compressor main body 21. Although not shown in detail, the plurality of leg portions 22 protrude outward in the radial direction from the compressor main body 21 as viewed from the up-down direction, and are provided at intervals in a circumferential direction. Each of the leg portions 22 forms a plate shape in which the up-down direction is set as a thickness direction, and a circular through-hole 23 (refer to Fig. 2) is formed in a tip portion thereof.

### (Configuration of Support Part)

The support part 30 fixes the compressor main body 21 to a bottom surface 11 of the casing 10 via the leg portions 22. As shown in Fig. 2, the support part 30 has a stud bolt 31 and an anti-vibration rubber 32. The stud bolt 31 is inserted to protrude upward from an opening portion 12 formed in the bottom surface 11 of the casing 10. Specifically, the stud bolt 31 has a circular head portion 33 and a shaft portion 34 that protrudes from the head portion 33 to one side (upper side) in an axis O direction extending in the up-down direction.

A diameter of the opening portion 12 formed in the bottom surface 11 of the casing 10 is set to be slightly larger than an outer diameter of the shaft portion 34 and sufficiently smaller than an outer diameter of the head portion 33. Therefore, only the shaft portion 34 protrudes above the opening portion 12, and the head portion 33 is in a state of being left below the bottom surface 11 of the casing 10. The stud bolt 31 is fixed to the casing 10 by welding. In addition, as shown in Fig. 2, an end edge of the opening portion 12 protrudes in a cylindrical shape toward the upper side in the axis O direction. This is for preventing the stud bolt 31 from falling.

### (Configuration of Antivibration Rubber)

The anti-vibration rubber 32 forms a tubular shape that surrounds the shaft portion 34 of the stud bolt 31 from an outer peripheral side. That is, the anti-vibration rubber 32 forms a tubular shape centered on the axis O. An insertion tapered surface 41, an attachment recessed portion 42, a deformation recessed portion 43, and a reduced diameter portion 44 are formed on an outer peripheral surface of the anti-vibration rubber 32 in order from one side toward the other side in the axis O direction. The insertion tapered surface 41 is provided to facilitate insertion of the anti-vibration rubber 32 into the through-hole 23 of the leg portion 22 described above. The insertion tapered surface 41 gradually increases in diameter from one side toward the other side in the axis O direction. That is, an upper end edge of the insertion tapered surface 41 has a smaller diameter than that of a lower end edge. In addition, the insertion tapered surface 41 forms an annular shape as viewed from the axis O direction.

The attachment recessed portion 42 is formed on the other side (lower side) of the insertion tapered surface 41 in the axis O direction. The attachment recessed portion 42 is a portion for accommodating the leg portion 22. The attachment recessed portion 42 forms an annular shape centered on the axis O and is recessed in a rectangular shape toward an inner peripheral side. A surface on the inner peripheral side of an insertion recessed portion is located on the inner peripheral side with respect to the lower end edge of the insertion tapered surface 41. In a case where the insertion tapered surface 41 is inserted into the through-hole 23 of the leg portion 22, the anti-vibration rubber 32 is elastically deformed, so that the outer diameter temporarily decreases compared to the through-hole 23. In a case where the insertion tapered surface 41 is passed over, the elastic deformation of the insertion tapered surface 41 is restored, so that the leg portion 22 enters a state of being accommodated in the attachment recessed portion 42. That is, the insertion tapered surface 41 protrudes to the outer peripheral side with respect to the attachment recessed portion 42, so that the leg portion 22 is fixed not to fall off.

A plurality of (two as an example) deformation recessed portions 43a and 43b are formed on the other side (lower side) of the attachment recessed portion 42 in the axis O direction. The deformation recessed portions 43a and 43b are recessed on the inner peripheral side centered on the axis O. In cross-sectional view including the axis O, cross-sectional shapes of the deformation recessed portions 43a and 43b are approximately V-shaped or U-shaped. The deformation recessed portion 43a on one side (upper side) in the axis O direction of the two deformation recessed portions 43a and 43b is more recessed to the inner peripheral side than the deformation recessed portion 43b on the lower side. In addition, a dimension in the axis O direction is also larger than that of the lower deformation recessed portion 43b on the lower side. That is, a volume of the deformation recessed portion 43a on the upper side is set to be larger than a volume of the deformation recessed portion 43b on the lower side. In addition, the two deformation recessed portions 43a and 43b are arranged at intervals in the axis O direction.

The reduced diameter portion 44 is formed on a further lower side (the other side in the axis O direction) of the deformation recessed portion 43b on the lower side. A diameter dimension of the reduced diameter portion 44 gradually decreases from the upper side toward the lower side (that is, from one side to the other side in the axis O direction). A lower surface of the anti-vibration rubber 32 is in contact with the bottom surface 11 of the casing 10. That is, the lower surface forms a planar shape extending along a plane orthogonal to the axis O.

A gap is formed between an inner peripheral surface of the anti-vibration rubber 32 and an outer peripheral surface of the stud bolt 31. On the inner peripheral surface of the anti-vibration rubber 32, a small-diameter portion 51, a tapered surface 52, a large-diameter portion 53, and a fixing portion 54 are formed in order from one side toward the other side in the axis O direction.

The small-diameter portion 51 forms a cylindrical surface shape centered on the axis O. The small-diameter portion 51 is provided at a position at which the small-diameter portion overlaps the insertion tapered surface 41 described above in the axis O direction. An inner diameter dimension of the small-diameter portion 51 is constant over the entire region in the axis O direction. The small-diameter portion 51 faces the outer peripheral surface of the stud bolt 31 via a gap that extends over an entire region in the circumferential direction.

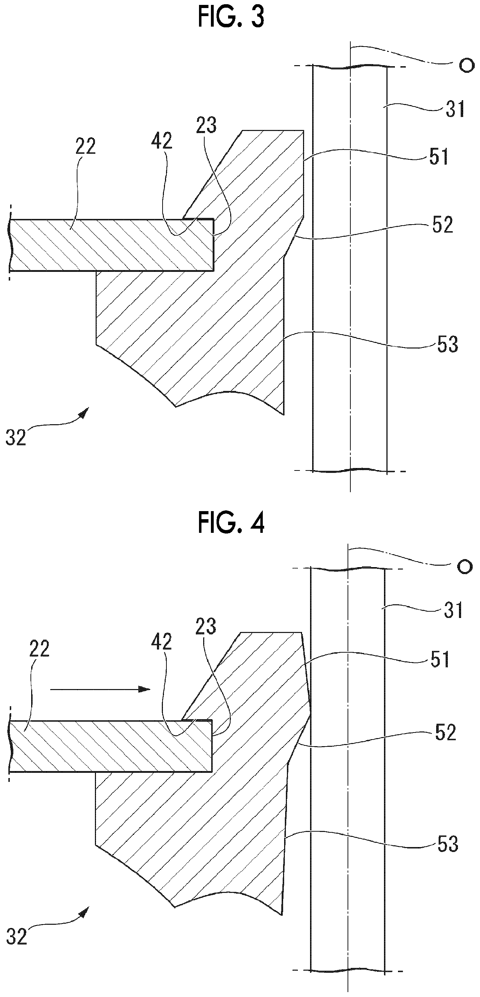

The tapered surface 52 is formed on the other side (lower side) of the small-diameter portion 51 in the axis O direction. A diameter dimension of the tapered surface 52 gradually increases from one side toward the other side in the axis O direction. The tapered surface 52 is provided at a position at which the tapered surface 52 overlaps the attachment recessed portion 42 described above in the axis O direction. In other words, as shown in Fig. 3, an upper end edge of the tapered surface 52 is at the same position as that of an upper end edge of the attachment recessed portion 42, and a lower end edge of the tapered surface 52 is at the same position as that of a lower end edge of the attachment recessed portion 42. That is, in a case where the compressor 20 vibrates and the leg portion 22 is displaced in a horizontal direction, a force in the horizontal direction is applied to the tapered surface 52. The tapered surface 52 also faces the outer peripheral surface of the stud bolt 31 via the gap that extends over the entire region in the circumferential direction. Note that being "the same" means being essentially the same, and manufacturing tolerances and design errors are allowed. The same applies hereinafter.

As shown in Fig. 2, the large-diameter portion 53 is formed on the other side (lower side) of the tapered surface 52 in the axis O direction. The large-diameter portion 53 forms a cylindrical surface shape centered on the axis O. The large-diameter portion 53 is provided at a position at which the large-diameter portion overlaps the deformation recessed portion 43 described above in the axis O direction. An inner diameter dimension of the large-diameter portion 53 is larger than the inner diameter dimension of the small-diameter portion 51 described above. In addition, the inner diameter dimension of the large-diameter portion 53 is constant over the entire region in the axis O direction. That is, a separation distance between the stud bolt 31 and the large-diameter portion 53 in the radial direction is constant over the entire region in the axis O direction. The large-diameter portion 53 faces the outer peripheral surface of the stud bolt 31 via the gap that extends over the entire region in the circumferential direction.

The fixing portion 54 is provided on the other side (lower side) of the large-diameter portion 53 in the axis O direction. The fixing portion 54 forms an annular shape protruding to the inner peripheral side with respect to the large-diameter portion 53. The large-diameter portion 53 is connected to the stud bolt 31 via a part of the casing 10 (protrusion portion of the end edge of the opening portion 12) with respect to the stud bolt 31. An inner diameter dimension of the fixing portion 54 is slightly larger than or the same as the outer diameter dimension of the shaft portion 34 of the stud bolt 31. In addition, a nut 56 is attached to a stud bolt tip 55, and the entire anti-vibration rubber 32 is prevented from falling off the stud bolt 31.

### (Effects)

Subsequently, an example of an operation and behavior of the air conditioner 1 described above will be described. During an operation of the compressor 20 and at a time of start-up and stop, various vibrations may occur in the up-down direction (axis O direction), the horizontal direction, and a direction in which these directions are combined. In a case where such vibrations continue, not only noise is generated, but also there is a possibility of fatigue fracture of a device. Therefore, in the present embodiment, the anti-vibration rubber 32 described above is provided in the support part 30.

First, in a case where the compressor 20 vibrates in the up-down direction, the vibration is also transmitted to the anti-vibration rubber 32 via the leg portion 22. In a case where vibration is transmitted, the deformation recessed portions 43a and 43b of the anti-vibration rubber 32 are elastically deformed to be crushed from both sides in the axis O direction. That is, since the deformation recessed portions 43a and 43b are formed, the anti-vibration rubber 32 actively behaves like a spring. A natural frequency at which the compressor 20 is supported by the anti-vibration rubber 32 in the up-down direction due to this spring element is set to an appropriate frequency equal to or lower than a compressor operation range, so that the vibration in the up-down direction is dampened by the anti-vibration rubber 32. Therefore, the vibration is less likely to be transmitted to the casing 10 side. As a result, it is possible to significantly reduce noise.

In particular, according to the above configuration, as the deformation recessed portion 43a is located higher, that is, as the deformation recessed portion 43a is located closer to the compressor 20 which is a vibration source, a radial recess becomes larger. That is, a spring constant of the deformation recessed portion 43a is smaller than that of the deformation recessed portion 43b. Therefore, the deformation recessed portion 43a is preferentially deformed with respect to the vibration of the compressor 20 in the up-down direction. In a case where the vibration of the compressor 20 in the up-down direction increases, the deformation recessed portion 43a is deformed, and as a result, upper and lower surfaces of the deformation recessed portion 43a come into contact with each other, so that a cross-sectional area increases. That is, the spring constant increases, and the vibration of the compressor, which is equal to or higher than a certain level, is suppressed, so that damage to the device can be prevented. Therefore, even in a case where the frequency or amplitude of the vibration in the up-down direction changes, it is possible to effectively dampen the vibration over a more flexible and wider frequency range. In this manner, vibration and noise can be stably reduced regardless of an operation rotation speed of the compressor 20.

Next, a case where the compressor 20 vibrates in the horizontal direction (that is, a direction orthogonal to the axis O) will be considered. In this case, the vibration is also transmitted to the anti-vibration rubber 32 via the leg portion 22. A portion (large-diameter portion 53) below the tapered surface 52 on the inner peripheral surface has a constant separation distance from the stud bolt 31 over the entire region in the axis O direction. According to the above-described configuration, the portion (large-diameter portion 53) below the tapered surface 52 is in a state of facing the stud bolt 31 with a gap therebetween at a constant separation distance. In a case where the vibration of the compressor 20 is small, the inner peripheral surface and the stud bolt 31 do not come into contact with each other, and the vibration of the compressor 20 is not directly transmitted to the stud bolt 31. In addition, since the spring constant of the anti-vibration rubber 32 can be reduced, a natural frequency, at which the compressor 20 is supported, is set to an appropriate frequency equal to or lower than a compressor operation range, so that the vibration in the horizontal direction is dampened by the anti-vibration rubber 32, and the vibration is less likely to be transmitted to the casing 10 side. As a result, it is possible to significantly reduce noise.

In a case where a large vibration is transmitted from the compressor 20, as shown in Fig. 4, first, the boundary between the tapered surface 52 and the small-diameter portion 51 instantaneously comes into contact with the shaft portion 34 of the stud bolt 31. Thereafter, the anti-vibration rubber 32 repeats movement of being separated from or abutting against the stud bolt 31. Here, in a case where the anti-vibration rubber 32 is in contact with the stud bolt 31, an area of the surface of the anti-vibration rubber 32 in contact with the stud bolt 31 is small, and thus the noise and vibration of the air conditioner 1 can be suppressed.

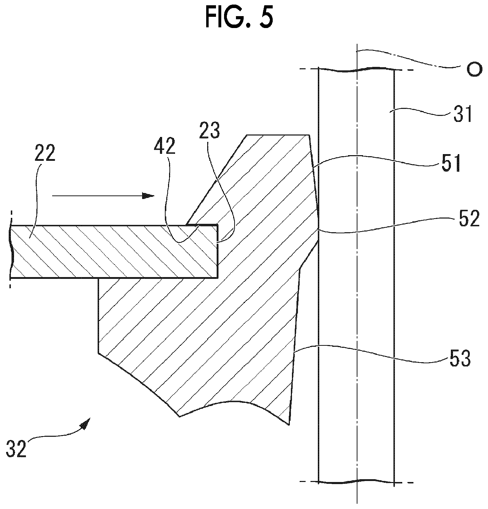

In a case where the amplitude of the vibration further increases, as shown in Fig. 5, a part of the tapered surface 52 on the upper side enters a state of being brought into surface contact with the shaft portion 34 of the stud bolt 31. As a result, the spring constant of the anti-vibration rubber 32 is further increased. Therefore, the vibration and displacement of the compressor 20, which are equal to or more than a certain value, are suppressed, and thus it is possible to prevent a significant deterioration in noise and vibration or damage to the air conditioner 1. As a result, it is possible to stably continue the operation, start-up, and stop of the compressor 20 at a low rotation speed for energy saving in recent years. In this way, a contact area between the tapered surface 52 and the stud bolt 31 changes according to the frequency or the amplitude of the vibration of the compressor 20. That is, the spring constant of the anti-vibration rubber 32 appears to change according to characteristics of the vibration. In this manner, resonance avoidance of the anti-vibration rubber 32 and the compressor 20 and suppression of vibration and displacement of the compressor are achieved in a variety of frequency ranges. As a result, the vibration or noise of the air conditioner 1 can be reduced.

Further, a portion (small-diameter portion 51) above the tapered surface 52 on the inner peripheral surface is closer to the stud bolt 31 than a portion (large-diameter portion 53) below the tapered surface 52. According to the above-described configuration, for example, in a case where vibration or impact accompanied by a very large amplitude occurs during transportation of the air conditioner 1 or the like, a portion (small-diameter portion 51) above the tapered surface 52 comes into contact with the stud bolt 31, so that a displacement amount of the compressor 20 can be suppressed. In other words, since the anti-vibration rubber 32 is interposed between the stud bolt 31 and the leg portion 22, it is possible to greatly reduce a possibility that a pipe connected to the compressor 20 is damaged by external vibration and impact during transportation.

In addition, an upper end portion (insertion tapered surface 41) of the outer peripheral surface of the anti-vibration rubber 32 gradually decreases in diameter from a lower side to an upper side. According to the above-described configuration, since the upper end portion (insertion tapered surface 41) of the outer peripheral surface gradually decreases in diameter, in a case where the leg portion 22 of the compressor 20 is attached, the anti-vibration rubber 32 can be easily elastically deformed with a smaller force without applying a large force in a case where the anti-vibration rubber 32 is inserted into the through-hole 23 of the leg portion 22. In this manner, an efficiency of an assembly work of the air conditioner 1 can be improved.

### (Other Embodiments)

The embodiments of the present disclosure have been described in detail with reference to the drawings. However, the specific configuration is not limited to the embodiments of the present disclosure, and includes design changes and the like without departing from the gist of the present disclosure. For example, the number of the deformation recessed portions 43 is not limited to the above-described two. The number may be one or three or more. In addition, the number of the leg portions 22 of the compressor 20 is not particularly limited, and may be appropriately set according to design or specifications. In addition, an angle formed by the tapered surface 52 with respect to the small-diameter portion 51 or the large-diameter portion 53 may be appropriately set according to vibration characteristics or operation characteristics of the compressor 20.

### <Additional Note>

For example, the air conditioner 1 according to each embodiment described above is understood as follows.

(1) An air conditioner 1 according to a first aspect includes a casing 10, a compressor 20 that is provided in the casing 10, and a support part 30 that supports the compressor 20 with respect to the casing 10, in which the support part 30 has a stud bolt 31 that is fixed to a bottom surface 11 of the casing 10 and extends upward in an axis O direction, and an anti-vibration rubber 32 that supports the compressor 20 and has a cylindrical inner peripheral surface surrounding the stud bolt 31 and centered on an axis O and an outer peripheral surface facing an outer peripheral side, a lower end of the inner peripheral surface being fixed to the stud bolt 31 and a portion above the lower end of the inner peripheral surface accommodating the stud bolt 31 via a gap, an attachment recessed portion 42, which has an annular shape centered on the axis O and is recessed toward an inner peripheral side, thereby allowing the compressor 20 to be attached, is formed on the outer peripheral surface, and a tapered surface 52 that decreases in diameter from a lower side to an upper side is formed at a position at which the tapered surface 52 overlaps the attachment recessed portion on the inner peripheral surface in the axis O direction.

According to the above-described configuration, in a case where the compressor 20 vibrates, a contact area between the tapered surface 52 and the stud bolt 31 changes according to a frequency or an amplitude of the vibration. That is, a natural frequency of the anti-vibration rubber 32 appears to change according to characteristics of the vibration. In this manner, resonance between the anti-vibration rubber 32 and the compressor 20 is avoided in response to various frequency ranges. As a result, the vibration or noise of the air conditioner 1 can be reduced.

(2) The air conditioner 1 according to a second aspect is the air conditioner according to (1), in which a deformation recessed portion 43 that forms an annular shape centered on the axis O and is recessed toward an inner peripheral side is formed below the attachment recessed portion on the outer peripheral surface.

According to the above-described configuration, in a case where the compressor 20 vibrates in the axis O direction, the deformation recessed portion 43 is elastically deformed to be crushed from both sides in the axis O direction. In this manner, the vibration can be absorbed by the anti-vibration rubber 32.

(3) The air conditioner 1 according to a third aspect is the air conditioner 1 according to (2), in which a plurality of the deformation recessed portions 43 arranged at intervals in the axis O direction are formed, and a radial recess becomes larger as the deformation recessed portion 43 is located higher.

According to the above configuration, as the deformation recessed portion 43 is located higher, that is, as the deformation recessed portion 43 is located closer to the compressor 20 which is a vibration source, a radial recess becomes larger. That is, a spring constant of the deformation recessed portion 43 can be reduced. Therefore, the anti-vibration rubber 32 becomes essentially softer, and thus it is possible to more actively absorb the vibration in the up-down direction.

(4) The air conditioner 1 according to a fourth aspect is the air conditioner 1 according to any one of (1) to (3), in which a portion of the inner peripheral surface above the tapered surface 52 is located closer to the stud bolt 31 than a portion of the inner peripheral surface below the tapered surface 52.

According to the above-described configuration, for example, in a case where vibration accompanied by a very large amplitude occurs during transportation of the air conditioner 1 or the like, a portion above the tapered surface 52 comes into contact with the stud bolt 31 preferentially, so that the vibration can be effectively absorbed.

(5) The air conditioner 1 according to a fifth aspect is the air conditioner 1 according to any one of (1) to (4), in which a portion of the inner peripheral surface below the tapered surface 52 has a constant separation distance from the stud bolt 31 over an entire region in the axis O direction.

According to the above-described configuration, the portion below the tapered surface 52 is in a state of facing the stud bolt 31 with a gap therebetween at a constant separation distance. In this manner, it is possible to reduce a possibility that the vibration of the compressor 20 is directly transmitted to the stud bolt 31. As a result, the vibration is not transmitted to the casing 10, and noise can be further reduced.

(6) The air conditioner 1 according to a sixth aspect is the air conditioner 1 according to any one of (1) to (5), in which an upper end portion of the outer peripheral surface gradually decreases in diameter from the lower side to the upper side.

### Industrial Applicability

According to the above-described configuration, since the upper end portion of the outer peripheral surface gradually decreases in diameter, the anti-vibration rubber 32 can be more easily elastically deformed in a case where the leg portion 22 of the compressor 20 is attached. In this manner, an efficiency of an assembly work of the air conditioner 1 can be improved.

### Reference Signs List

1: air conditioner
10: casing
11: bottom surface
12: opening portion
20: compressor
21: compressor main body
22: leg portion
23: through-hole
30: support part
31: stud bolt
32: anti-vibration rubber
33: head portion
34: shaft portion
41: insertion tapered surface
42: attachment recessed portion
43a: deformation recessed portion
43b: deformation recessed portion
44: reduced diameter portion
51: small-diameter portion
52: tapered surface
53: large-diameter portion
54: fixing portion
O: axis

## Claims

1. An air conditioner comprising:
a casing;
a compressor that is provided in the casing; and
a support part that supports the compressor with respect to the casing,
wherein the support part has
a stud bolt that is fixed to a bottom surface of the casing and extends upward in an axial direction, and
an anti-vibration rubber that supports the compressor and has a cylindrical inner peripheral surface surrounding the stud bolt and centered on an axis and an outer peripheral surface facing an outer peripheral side, a lower end of the inner peripheral surface being fixed to the stud bolt and a portion above the lower end of the inner peripheral surface accommodating the stud bolt via a gap,
an attachment recessed portion, which has an annular shape centered on the axis and is recessed toward an inner peripheral side, thereby allowing the compressor to be attached, is formed on the outer peripheral surface, and
a tapered surface that decreases in diameter from a lower side to an upper side is formed at a position at which the tapered surface overlaps the attachment recessed portion on the inner peripheral surface in the axial direction.

2. The air conditioner according to claim 1,
wherein a deformation recessed portion that forms an annular shape centered on the axis and is recessed toward an inner peripheral side is formed below the attachment recessed portion on the outer peripheral surface.

3. The air conditioner according to claim 2,
wherein a plurality of the deformation recessed portions arranged at intervals in the axial direction are formed, and a radial recess becomes larger as the deformation recessed portion is located higher.

4. The air conditioner according to any one of claims 1 to 3,
wherein a portion of the inner peripheral surface above the tapered surface is located closer to the stud bolt than a portion of the inner peripheral surface below the tapered surface.

5. The air conditioner according to claim 1,
wherein a portion of the inner peripheral surface below the tapered surface has a constant separation distance from the stud bolt over an entire region in the axial direction.

6. The air conditioner according to claim 1,
wherein an upper end portion of the outer peripheral surface gradually decreases in diameter from the lower side to the upper side.
